# EUROPEAN PATENT APPLICATION

(11) **EP 4 371 412 A1**
(43) Date of publication of application: **22.05.2024**
(21) Application number: 23210807.6
(22) Date of filing: 20.11.2023
(51) Int. Cl.: A21B 3/13, A21D 8/04, A21D 8/06, A21D 13/80, A47J 37/01

(54) **BAKING SUPPORT FOR FOOD PRODUCTS AND FOOD PREPARATION PROCESS**

(30) Priority: 21.11.2022 IT 202200023904
(71) Applicant: Gianpaolo Bassi Food Innovation, 54033 Carriona - Carrara (IT)
(72) Inventor: BASSI, Gianpaolo, 19033 CASTELNUOVO MAGRA - SP (IT)
(74) Representative: Nesti, Antonio

(57) **Abstract**

Support for baking food products, consisting of one or more walls in Carrara marble and relative baking process.

## Description

### Technical sector of the invention

The invention concerns a support in Carrara marble for baking food products, in particular but not in a limited manner to a mould for confectionery products such as panettone, and a process for the preparation of food products in the oven that uses the support.

### State of the art

At present, in the sector of the production of baked food products it is known that the final characteristics, in particular the organoleptic characteristics and the characteristics appreciable in the taste, depend to a large extent on the baking of the foodstuff, whether fresh or a more or less processed preparation, and that the baking in turn is dependent on the environment in which it takes place, i.e. on the support or mould that contains the foodstuff being prepared in the baking oven.

Currently, baking in the oven is made by arranging the product to be baked on metal supports or in containers or in special containers of terracotta or ceramics, or plastic materials such as silicone.

It is also known that some stones, such as soapstone, are also used to produce plates for cooking foodstuffs of different nature such as meats, or vegetable foodstuffs that are placed on the cold plate and then brought to temperature with the times and temperature levels suitable for the specific preparation. In any case, during the entire cooking process, the contact and the interaction of the foodstuff with the stone and the nature of the stone itself largely determines the quality of the finished product, both the cooking process and the organoleptic characteristics.

In the specific case of confectionery products, and in particular of panettones, it is also known that the process for preparing panettones involves a dough step that is left to rise in a container, generally made of plastic, followed by a second leavening step in a mould.

The leavening is then followed by the baking in the mould called paper mould in the oven which is the most significant step of the process and which determines most of the product's qualities, since during baking the aromas and the flavours develop and the caramelisation of the sugar takes place on the surface that makes the dome of the panettone golden in colour.

If the panettone is not baked properly, there is also a risk of releasing excessive moisture that will cause molds to develop, whereas at too high temperatures, there is a risk of burning and forming a superficial crust that prevents the dough from breathing.

Typically, also depending on the oven used, baking should take place at about 160°C for about an hour and the panettone is baked when the internal temperature is about 90 °C, the gelation temperature of the starch.

Over 90 degrees, the panettone tends instead to dry out whereas below them the gluten mesh that supports the product released from the mould is unstable and this one tends to flatten.

In view of the state of the art summarised above, the Applicant has found that the currently known solutions for baking food products in the oven both in relation to confectionery products and more generally to food products of a different nature, and which make use of traditional materials (metals, ceramics, terracotta, silicone) while maintaining substantially unchanged the times and the temperatures of the baking steps can be improved from the point of view of both the organoleptic qualities and the acid component of the finished product which, if excessive, entails greater exposure to health problems in the consumer, for example, to kidney stones, bone mass reduction, chronic pain, hormone levels and gastro-oesophageal reflux.

### Object of the invention

Therefore, the need is felt for a process for the production of food products, in particular of confectionery products such as panettones, which overcomes the drawbacks of the traditional systems and allows the production of baked foodstuffs with improved organoleptic and healthy characteristics.

### Summary of the invention

To this end, the invention has been achieved by proposing a support for baking foodstuffs in the oven, for example a mould, made of Carrara Marble and a process for the preparation of food products in the oven that makes use of this support/mould.

It is specified that foodstuff support is to be understood, in general, as any baking support of flat or convex geometry, such as baking trays for focaccia, bread, pizza, lasagna, vegetable cakes, tarts, etc., moulds for muffins, soufflés, plumcakes and more.

For the purposes of this description, Carrara Marble is to be understood as the marble extracted in the quarries of the Apuan Alps in the territory of Carrara whose characteristics have been well known for some time and reported in numerous literature, for example in the publication *"Carrara Marble: Geological,*

Merceological and Mining Aspects - Eurominerals and the Societey of Mining Professors - 1998, 12-16 September 1998, Carrara - Italy*"* and in particular in the publication *"*Geostructural and geomechanical setting of the Carrara Marble quarries, Italy 1995", author Massimo Coli, available at the page https://hdl.handle.net/2158/243224.

By way of non-limiting example, the general characteristics of the Carrara Marble are reported, as set out in the publications mentioned.

**Tab.1 Average composition of Carrara marble (from Coli, 1995, and ERTAG, 1980, modified)**

| | |
|---|---|
| CaCO₃ | -98 % |
| CaMg(CO₃)₂ | 1.76 % |
| MgO | 1.32 % mol |
| SiO₂ | 0.71 % |
| Sr | 114-160 ppm |
| Residue | 1.37 % |
| Grain size | 100-800 µm |

**Tab.2 Mechanical Properties of Carrara Marble (from Coli, 1998)**

| | |
|---|---|
| Density | 27.05 kN/m³ |
| Imbibition coefficientt | 0.6 ± 0.6 ‰ |
| Uniaxial compressive strength | 131 ± 3 Mpa |
| Uniaxial c. strength (iced cycled) | 126 ± 6 Mpa |
| Tangent elastic modulus | 75000 ± 700 Mpa |
| Secant elastic modulus | 83550 ± 250 Mpa |
| Bending strength | 16.9 ± 0.4 Mpa |
| Wear thickness loss | 5.6 ± 1.7 mm |
| Impact collapse height | 53 ± 5 cm |
| Linear thermal expantion coeff. | 6.3 ± 0.5 × 10⁻⁶ °C⁻¹ |
| Knoop index | 1.463 Mpa |
| Poisson's ratio | 0.274 |
| Rigidity | 21700 Mpa |

A first advantage consists in the fact that the food product obtained has improved organoleptic characteristics in particular for the goodness and the efficacy in the taste conferred by baking in the oven on a support of natural Carrara marble.

In fact, it was found that a support for foodstuffs made of Carrara marble, if subjected to migration tests according to Reg. (EC) 1935:2004 art. 3 a) and b) does not release substances potentially dangerous to human health and is suitable for food contact. In particular, it was found that if subjected to specific migration tests, a support according to the invention does not release appreciable quantities of substances such as Iron, Chromium, Nickel, Aluminium, Antimony, Cobalt, Copper, Magnesium, Manganese, Molybdenum, Silver, Tin, Titanium, Vanadium, Zinc, Arsenic, Barium, Beryllium, Cadmium, Lead, Lithium, Mercury, and Thallium.

A further advantage consists in the efficiency of the production process. i.e. in the baking quality obtained thanks to the marble support.

### List of drawings

These and other advantages will be better understood by any person skilled in the art from the following description and the accompanying drawings, given as a non-limiting example, in which:
- fig.1 shows a mould in white Carrara marble according to the invention;
- fig.2 schematically shows a process and a mould according to the invention for the production of panettones;
- fig.3a and 3b show the results of the tests carried out with the organoleptic characteristics of a panettone produced with a mould and a process according to the invention;
- figs. 4a-4h show different examples of oven support for foodstuffs according to the invention.

### Detailed description

With reference to the attached drawings, a support S according to the invention for baking food products in the oven, preferably but not in a limited manner to confectionery products such as panettones P is described.

In the illustrated embodiment, the support S may consist of one or more walls intended to support or in any case contain the foodstuff.

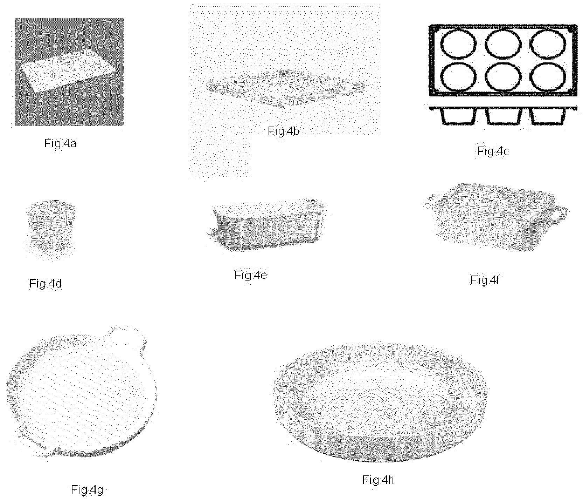

Figures 4a-4h report, by way of non-limiting example, some examples, such as:
- marble baking trays for focaccia, bread, pizza etc. (fig.4a, 4b)
- marble mould for muffins (fig.4c)
- marble mould for soufflé (fig.4d)
- marble mould for plumcake (fig.4e)
- marble baking trays for foodstuffs such as lasagna, vegetable cakes, tarts etc. (fig.4f-4h)

In the different embodiments, the support S consists of a flat bottom 3 and any flat side walls 1, 2 arranged on the sides, made of Carrara marble and preferably forming in combination a cavity for example a parallelepiped cavity 4 configured to accommodate a food product, preferably a dough 6 of a confectionery product to be baked.

Advantageously, the marble used for the realization of both the walls 1, 2 and the bottom 3 can be one or more types of Carrara marble, preferably white marble.

In addition, the cavity 4 formed by the walls 1, 2 and by the bottom 3 may be a square-based cavity with a side between 19 cm and 21 cm, preferably 20.5 cm and height between 9 cm and 11 cm preferably 10 cm, with a thickness of the walls and of the bottom between 2 cm and 1 cm preferably equal to 1.5 cm. However, it is understood that the linear dimensions and the thickness of the walls 1, 3 and of the bottom 3 may vary depending on the product to be prepared and on the baking process to be followed.

According to the invention, the support S in Carrara marble is used for baking a food product in the oven which is arranged directly in contact with the support with the dual advantage of improved baking and safety for the consumer since, as seen above, it has been found that Carrara marble when used as a rest or container in baking in the oven does not release appreciable amounts of substances potentially dangerous to human health.

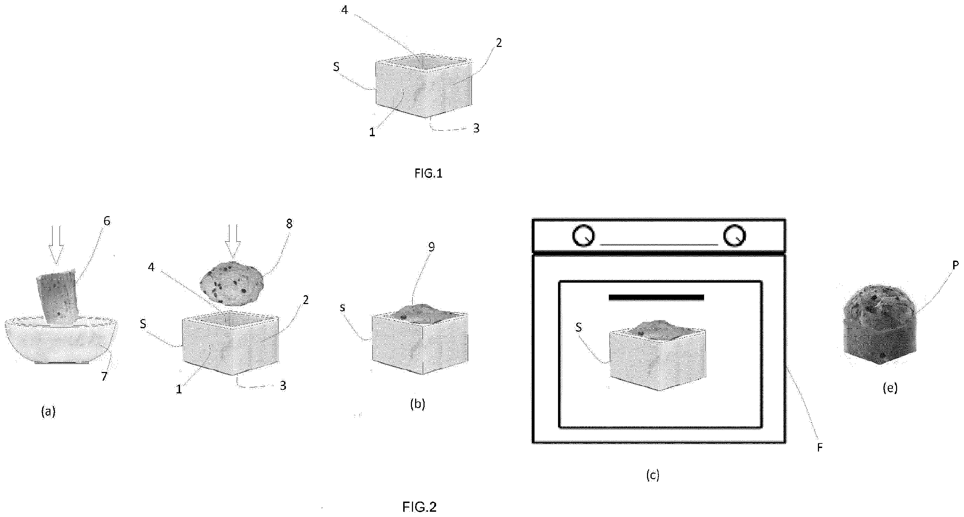

In an example of use schematized in Figure 2, the mould S can be used in a process for the preparation of a panettone P, in which the dough 6 is matured in a basin 7 of Carrara marble (step (a) ).

Subsequently, the first dough is put back into the kneader and a second dough is obtained which is possibly broken up to have the correct size, for example 1.2-1.25 kg and then cast into the mould S where it is made to rise (step (b) ) and bake (step (c ) ) in an oven F.

Preferably, the maturation of the dough 6 in the basin 7 can continue for a maturation time of between twelve and sixteen hours at a temperature of between 18 °C and 20 °C until obtaining a matured dough 8 to be cast into the mould S and allowed to rise for a leavening time of between six and 10 hours at a room temperature preferably between 18 °C and 20 °C, to obtain a leavened dough 9 that will be brought into the oven for the baking step for example for a baking time between fifty-five and sixty minutes at a temperature of between 160 °C and 170 °C, after which the parallelepiped-shaped panettone P can be removed from the oven.

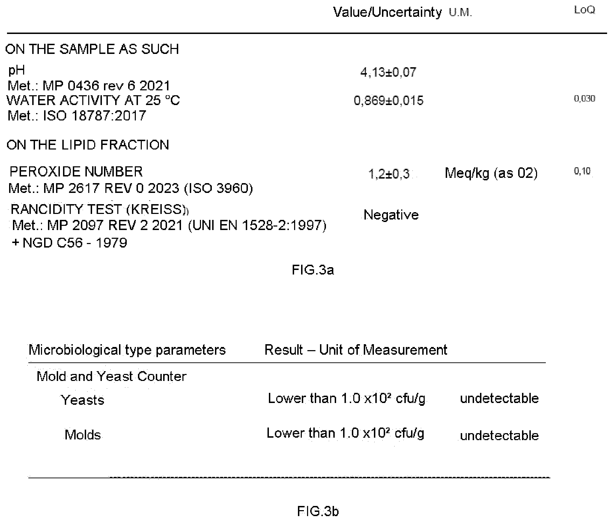

Advantageously, it has been found that the panettone P obtained with the described process has improved organoleptic and/or sanitary characteristics, in particular those summarized in the table of fig.3a, 3b relating to a panettone obtained according to the process.

The present invention has been described according to preferred embodiments but equivalent variants can be conceived without departing from the scope of protection granted.

## Claims

1. Baking support for food products, **characterised in that** it consists of at least one natural wall of Carrara marble.

2. Support according to claim 1, consisting of a bottom wall (3) and of side walls (1, 2) in Carrara marble a cavity intended to accommodate the food product to be baked.

3. Support according to claim 2, consisting of a bottom part (3) and of flat side walls (1, 2) forming a mould with parallelepiped cavity (4), intended to accommodate a dough (6) of a confectionery product to be baked.

4. Support according to claim 3, wherein said cavity is a square-based cavity with a side between 19 cm and 21 cm.

5. Support according to claim 4, wherein said cavity is a 10-cm sided square-based cavity.

6. Support according to one of the preceding claims, wherein one or more of said walls (1, 2) and said bottom (3) have a thickness between 2 cm and 1 cm, preferably 1.5 cm.

7. Process for the preparation of a food product comprising a step of baking in a oven a food product which is arranged on a support according to one of the preceding claims.

8. Process according to claim 7 wherein said food product is arranged directly in contact with the support (S).

9. Process according to claim 7 or 8 wherein said food product is a panettone (P) and said process is a process for the preparation of panettone (P), comprising the following steps
preparing a dough to be leavened (6)
introducing the dough (6) into a basin (7) made of Carrara marble
maturing the dough in the basin (7) for a maturation time between twelve and sixteen hours at a temperature between 18 °C and 20 °C,
introducing the matured dough (8) into a mould (S) according to one of the preceding claims 3-7,
leavening the dough (8) in the mould (S) for a leavening time of between six and ten hours at room temperature, for example between 18 °C and 20 °C,
baking the leavened dough (9) in the mould (S) in the oven for a baking time between fifty-five and sixty minutes at a temperature between 160° and 170 °C,
releasing the panettone (P) from the mould.

10. Parallelepiped-shaped panettone (P) produced according to the process of claim 9.
